(19) **Europäisches Patentamt**

**European Patent Office**

**Office européen des brevets**

(11) **EP 0 990 905 A1**

(12) **EUROPEAN PATENT APPLICATION**
published in accordance with Art. 158(3) EPC

(43) Date of publication:
05.04.2000 Bulletin 2000/14

(51) Int. Cl.⁷: $G01N\ 35/00$, $G01N\ 35/02$, $G01N\ 35/04$

(21) Application number: 98919522.7

(22) Date of filing: 08.05.1998

(86) International application number:
PCT/JP98/02044

(87) International publication number:
WO 98/52046 (19.11.1998 Gazette 1998/46)

(84) Designated Contracting States:
CH DE DK FR GB IT LI SE

(30) Priority: 12.05.1997 JP 12053397

(71) Applicant: Hitachi, Ltd.
Chiyoda-ku, Tokyo 101-8010 (JP)

(72) Inventors:
• TOKIEDA, Hitoshi
Hitachinaka-shi, Ibaraki 312-0056 (JP)

• IKEDA, Toshiyuki
Hitachinaka-shi, Ibaraki 312-0052 (JP)
• KODAMA, Ryuichiro
Hitachinaka-shi, Ibaraki 312-0011 (JP)

(74) Representative:
von Hellfeld, Axel, Dr. Dipl.-Phys.
Wuesthoff & Wuesthoff
Patent- und Rechtsanwälte
Schweigerstrasse 2
81541 München (DE)

(54) **INSPECTED ITEM PROCESSING SYSTEM**

(57)    An object of the present invention is to provide a sample processing system which can, even if the position of the transfer station for moving sample racks between the transport line and a plurality of sample processing units from one to another is changed, smoothly move the sample racks between them.

The sample processing system comprises a combination of the rack supply stocker (6), the rack transport line (7), the rack storage stocker (8), and a plurality of sample processing units (3, 4, 5, 100, 200, 300) arranged along the transport line. The parameters of the system configuration such that each of the sample processing units is arranged so as to correspond to what position of the transport line and each of them has what function and the parameters indicating the access positions that the sample rack (10) transported by the transport line is read by the respective sample processing units are input from the parameter input device (11) and registered in the central controller 9 beforehand. On the basis of such stored parameters, the operation control of the transport line (7) and the sample rack movement control between the transport line and each of the sample processing units from one to another are executed.

FIG. 1

**Description**

Technical Field

The present invention relates to a sample processing system and particularly to a sample processing system suited to processing of samples when executing a clinical examination of many patient samples.

Background Art

The sample processing system generally includes a plurality of sample processing units and a transport line for connecting those units. A vessel storing a sample such as blood or urine is supplied in a state that it is held in a box-shaped holder called a sample rack. Each of a plurality of sample processing units has any of the functions of centrifugally separating the parent sample, pulling out the stopper from the vessel containing the parent sample after centrifugal separation, dispensing a part of the sample from the parent sample vessel into the child sample vessels, attaching bar code labels to the child sample vessels, fitting the stopper to the parent sample vessel after use, classifying the child sample racks according to use, and analyzing by measuring components by reacting the child samples. The sample processing system is structured by combining a plurality of sample processing units having these functions as required.

Japanese Patent Application Laid-Open 7-167866 discloses an example that a parent sample rack centrifugally separated is transported to a storage stocker by a belt line via a dispensing station and child sample racks receiving a part of the sample at the dispensing station are transported to a plurality of analyzers by other belt lines. Furthermore, Japanese Patent Application Laid-Open 7-167866 discloses that the sample is dispensed into each of the child sample racks on the plurality of belt lines, and then the plurality of belt lines are joined to one belt line and the various child sample racks are transported to the branch position, and after the branch position, the child sample racks are transported by a plurality of belt lines leading to the analyzers.

In a conventional sample processing system as shown in Japanese Patent Application Laid-Open 7-167866 mentioned above, the position of the transfer station for transferring racks between the sample transport line and each sample processing unit is perfectly fixed, so that it is necessary to position them accurately and the operation requires a lot of time. Furthermore, when the system configuration is decided once, changing of the layout of the system configuration such as changing and interchanging of the position of each sample processing unit and increasing or decreasing of the number is very difficult unless the hardware is changed because the sample rack transfer position between the sample transport line and each sample processing unit is limited.

Disclosure of the Invention

An object of the present invention is to provide a sample processing system which can, even if the position of the transfer station for moving sample racks between the transport line and a plurality of sample processing units from one to another is changed, smoothly move the sample racks between them.

Another object of the present invention is to provide a sample processing system which can easily change the layout of a combination of a plurality of sample processing units.

The present invention is applied to a sample processing unit having a transport line for transporting sample racks holding samples, a supply stocker for supplying sample racks to be transported to the transport line, and a plurality of sample processing units arranged along the transport line.

The sample processing system has a controller for controlling the transport operation of sample racks by the transport line, a means for transferring information of the access position for a sample rack in each sample unit to the controller, and a storage unit functioning as a part of the controller for storing information of the number and arrangement order of sample processing units arranged in this sample processing system and also storing access position information in each sample processing unit and the controller decides the position of the transfer station for sample racks on the transport line so as to correspond to the sample rack access position in each sample processing unit on the basis of the information stored in the storage unit.

The controller controls the operation of the transport line so as to transport sample racks from the supply stocker to any position in the transfer station decided so as to correspond to each sample processing unit.

As a means for transferring the access position information for sample racks, a rack transfer device having an input device, unit controller, reader of information from the storage medium, or rack sensor is used.

Brief Description of the Drawings

Fig. 1 is a conceptual diagram of the whole constitution of a sample processing system to which the present invention is applied.
Fig. 2 is a plan view showing the constitution of the hardware of the first embodiment on the basis of the present invention.
Fig. 3 is a flow chart showing an example of parameter registration in the first embodiment.
Fig. 4 is a flow chart showing a registration example of the first parameter in the first embodiment.

Fig. 5 is a flow chart showing a registration example of the second parameter in the first embodiment.

Fig. 6 is a flow chart showing a registration example of the third parameter in the first embodiment.

Fig. 7 is a flow chart showing a registration example of the fourth parameter in the first embodiment.

Fig. 8 is an illustration showing a registration example of the first parameter in the second embodiment on the basis of the present invention.

Fig. 9 is an illustration showing a registration example of the second parameter in the second embodiment.

Fig. 10 is an illustration showing a registration example of the third and fourth parameters in the second embodiment.

Fig. 11 is a block diagram showing the constitution of the third embodiment on the basis of the present invention.

Best Mode for Carrying Out the Invention

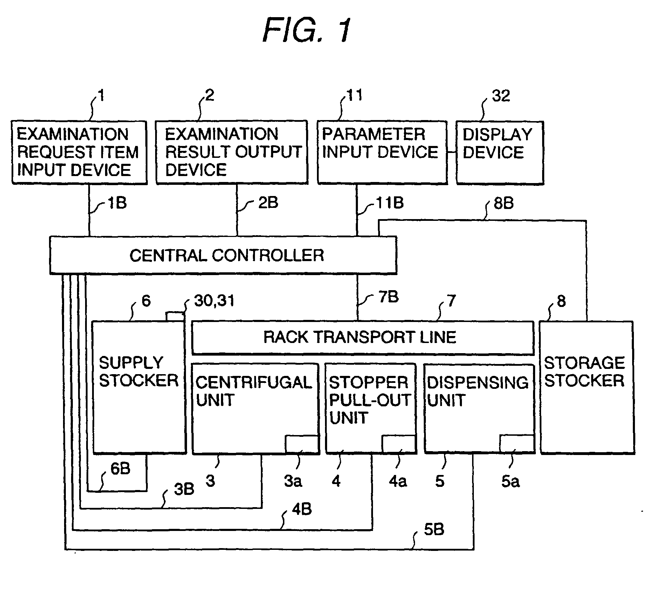

A block diagram showing the constitution of an embodiment on the basis of the present invention is shown in Fig. 1. In Fig. 1, samples such as blood or urine are lined up in a rack supply stocker 6 in the state that they are held in sample racks. To an examination request item input device 1, an examination item request for what examination is to be executed for each sample is input. An operator inputs the examination item, sample ID (sample identification information) for discriminating a sample, and sample attribute information (distinction of sex, age, sample kind, etc.) for each sample. To an examination result output device 2, the necessary result among the processes performed by sample processing units 3, 4, and 5 for the examination request input by the input device 1 is output. In the rack supply stocker 6, a plurality of sample racks to be supplied to the respective sample processing units can be put and as the processing of samples by the respective sample processing units progresses, the sample racks are supplied to a rack transport line 7 in the order of sample racks lined in the stocker.

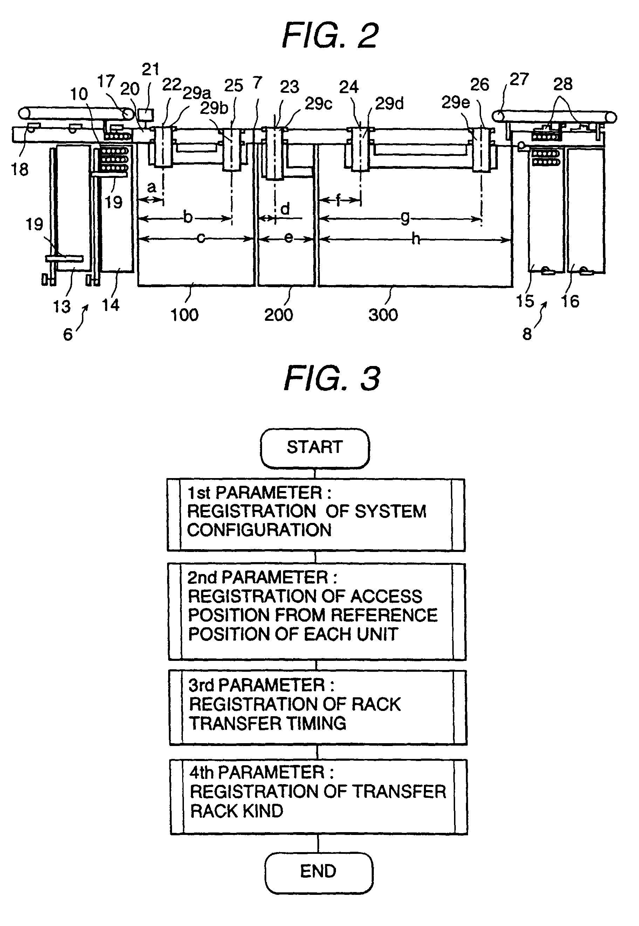

When the belt conveyor of the transport line 7 is driven by a pulse motor 21 (Fig. 2), a sample rack is transported from a place to another. A rack storage stocker 8 stores a sample rack for which the process on the basis of the examination request is completed. A user of the system can take out the processed sample rack from the storage stocker. The sample processing units 3, 4, and 5 have any of various functions of centrifugal separation, pull-out of the stopper, dispensing, attaching of bar code labels, fitting of the stopper, classification, and analysis and there are various dimensions thereof available. The respective sample processing units take sample racks transported by the transport line 7 into their own units via the rack transfer mechanism and return the sample racks to the transport line 7 again after processing.

The inlet for receiving sample racks from the transport line 7 by each sample processing unit is the access position on the receiving side and the outlet for sending sample racks to the transport line 7 by each sample processing unit is the access position on the ejection side. The movement of sample racks between the transport line and each sample processing unit from one to another like this is executed by the rack transfer mechanism. Therefore, the sending position or receiving position of sample racks on the transport line and the access position for sample racks in each sample processing unit correspond to each other and the rack transfer station is formed by these positions and the rack transfer mechanism.

The supply stocker 6, the rack transfer line 7, and the storage stocker 8 are connected to a central controller 9 via communication cables 6B, 7B, and 8B respectively and the operations thereof are controlled by the central controller 9. The centrifugal unit as a sample processing unit 3 has a built-in unit controller 3a, and the stopper pull-out unit as a sample processing unit 4 has a built-in unit controller 4a, and the dispensing unit as a sample processing unit 5 has a built-in unit controller 5a. These unit controllers 3a, 4a, and 5a are connected to the central controller 9 via communication cables 3B, 4B, and 5B respectively and the controllers mutually exchange information.

The central controller 9 is connected to the examination request item input device 1, the examination result output device 2, and a parameter input device 11 via communication cables 1B, 2B, and 11B. The central controller 9 sends sample racks from the supply stocker 6 to the rack transport line 7 and from the transport line 7 to the respective sample processing units or the storage stocker 8 according to the examination request contents input by the examination request item input device 1 and the storage stocker 8 stores sample racks sent from the respective sample processing units 3, 4, and 5 via the transport line 7. The respective unit controllers 3a, 4a, and 5a operate independently and when sample racks are moved by the transfer station, each unit controller reports a request of capable of sending sample racks (hereinafter referred to as a carrying-out enable request) and a request of capable of receiving sample racks (hereinafter referred to as a carrying-in enable request) to the central controller 9 via the communication cable and the central controller 9 selects a set from the requests, controls the transport line 7, outputs an instruction to the respective unit controllers via the communication cables at the same time, and receives or carries out sample racks in cooperation.

The parameter input device 11 is used to input the system configuration such as the kind and line (arrangement) of each sample processing unit constituting the processing system, the rack access position in the respective sample processing units, the timing that each processing unit sends sample racks to other sample processing units or the storage stocker 8 via the sample transport line 7, and the classification of racks to be handled by the respective sample processing units (for example, when a sample processing unit is a dispensing unit, three kinds of sample racks are transferred such as the parent sample rack which is the dispensing source, a child sample rack dispensed in a sample cup, and a child sample rack dispensed in a test tube) as parameters by an operator.

In the neighborhood of the rack outlet of the rack supply stocker 6, a reader 30 for reading the sample identification information attached to a sample vessel and a reader 31 for reading the rack identification information attached to a sample rack are provided. To the central controller 9, a display device 32 for displaying various kinds of information on the screen is connected.

Next, each unit will be explained in detail by referring to Fig. 2. In the drawing, three sample processing units 100, 200, and 300, which are equivalent to the sample processing units 3, 4, and 5, having different dimensions and functions (for example, centrifugal separation, pull-out of the stopper, dispensing, etc.) and having an inlet for taking a sample rack 10 on the rack transport line 7 into the own sample processing unit and an outlet for sending a sample rack in the own sample processing unit onto the transport line are arranged along the rack transport line 7. The supply stocker 6 has feed trays 13 and 14 and a feed-transport path and the storage stocker 8 has a storage-transport path and storage trays 15 and 16. Rack transfer mechanisms 29a, 29b, 29c, 29d, and 29e which are constituent members of the rack transfer station are attached to the corresponding sample processing units.

In this embodiment, the arrangement order of the sample processing units may be optionally changed. Although the number of sample processing units used is 3, it may be, for example, one or ten and the number of sample processing units is not limited. Furthermore, the inlet for taking in sample racks on the transport line and the outlet for sending sample racks onto the transport line which are provided in each sample processing unit may be provided in the common one position as shown in the sample processing unit 200 in the drawing instead of being provided in only one position respectively as shown in the sample processing units 100 and 300 in the drawing and they may be provided in a plurality of positions though not shown in the drawing.

The sample rack 10 shown in Fig. 2 is structured so as to hold five test tubes containing a sample. Also with respect to it, a sample rack holding five test tubes is used in this embodiment. However, according to the present invention, there are no restrictions on the number of test tubes and for example, a rack holding one or ten test tubes may be used.

Firstly, the aforementioned parameters are registered (stored) by the parameter input device 11. The first to fourth parameters are registered (stored) according to the flow chart shown in Fig. 3.

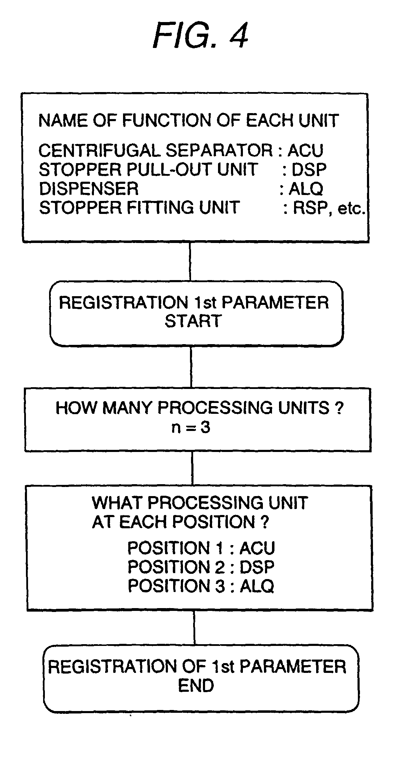

With respect to the system configuration of the first parameter, what position a sample processing unit having what function is to be arranged in is registered. In this case, the names of sample processing units having various functions and the functions corresponding to the names are registered in the central controller 9 beforehand. Fig. 4 shows a flow chart of registration of the first parameter. In this case, with respect to registration of a name, for example, when the unit is a centrifugal separator, it is ACU, and when the unit is a stopper pull-out unit, it is DSP, and when the unit is a dispenser, it is ALQ, and when the unit is a stopper fitting unit, it is RSP, and the central controller 9 recognizes the function for each name. In registration of the first parameter, the number of sample processing units constituting the processing system is input first and the positions for the input units are registered. Fig. 4 shows a flow chart on the assumption that the sample processing unit 100 shown in Fig. 2 is a centrifugal separator, and the processing unit 200 is a stopper pull-out unit, and the sample processing unit 300 is a dispenser. In this case, the number of sample processing units n is 3 and ACU because the first sample processing unit is a centrifugal separator, DSP because the second sample processing unit is a stopper pull-out unit, and ALQ because the third sample processing unit is a dispenser are sequentially registered. The central controller 9 judges the function of each sample processing unit on the basis of the names and stores the system configuration by registration of the positions.

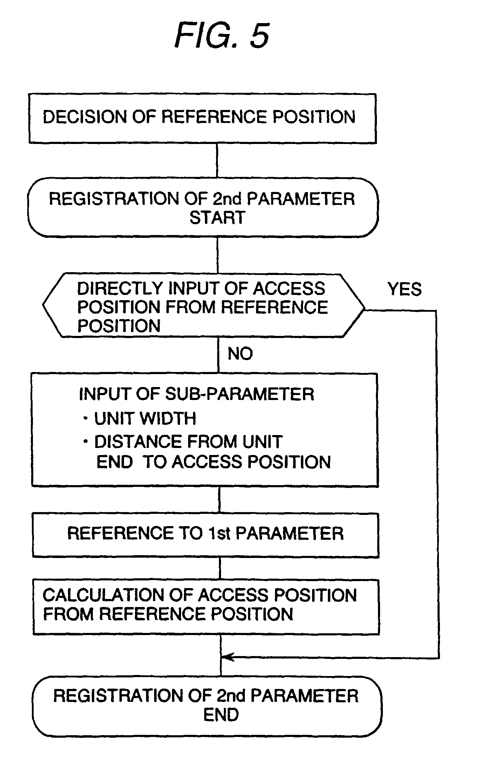

Fig. 5 shows a flow chart of registration of the second parameter, that is, regarding each sample processing unit used in the system, registration of the rack access positions equivalent to the inlet position of sample racks to each sample processing unit from the transport line and the outlet position of sample racks to the transport line from each sample processing unit. In this case, it is necessary to decide the reference position first. Then, the rack access position of each sample processing unit from the reference position is registered as a distance. Two registration methods may be considered and one is a method for directly inputting the distance from the reference position. In this case, a case that the position is directly measured and input from the parameter registration sound or a case that the distance is calculated from the dimensions of the respective sample processing units and the results are input may be considered.

Another one is a method for inputting a certain numerical value as a sub-parameter and calculating the rack access position of each sample processing unit using it. In this case, the reference position is set at the start position of the rack transport line 7, that is, at the left end of the first sample processing unit 100 and as sub-parameters, the widths of the respective sample processing units and the dimensions between the rack access positions of the respective sample processing units and the left ends of the respective sample processing units are input. With respect to the widths of the respective sample processing units shown in Fig. 2, the width of the sample processing unit 100 is equivalent to c, and that of the sample processing unit 200 is equivalent to e, and that of the sample processing unit 300 is equivalent to h. With respect to the distances between the rack access positions of the respective sample processing units and the left ends of the respective sample processing units, in the processing unit 100 shown in Fig. 2, the dimension a up to the position of the sample carrying-in unit 22 (inlet) where sample racks are taken in the own sample processing unit from the transport line and the dimension b up to the position of the sample carrying-out unit 25 (outlet) where sample racks are sent to the sample transport line from the own sample processing unit, and in the processing unit 200, the dimension d up to the position of the sample carrying-in unit 23 (inlet) where sample racks are taken in the own sample processing unit from the transport line and the dimension d up to the position of the sample carrying-out unit 23 (outlet) where sample racks are sent to the sample transport line from the own sample processing unit, and in the processing unit 300, the dimension f up to the position of the sample carrying-in unit 24 (inlet) where sample racks are taken in the own sample processing unit from the transport line and the dimension g up to the position of the sample carrying-out unit 26 (outlet) where sample racks are sent to the sample transport line from the own sample processing unit correspond to it.

When these sub-parameters are input, the central controller 9 refers to the registered contents of the first parameter, that is, the line (arrangement) of the sample processing units, automatically calculates the rack access positions of the respective sample processing units in a form of distance from the reference position, and decides and registers the position of the transfer station on the transport line. With respect to the processing unit 100, the central controller 9 recognizes that the left end of the sample processing unit is the start position of the transport line from the registration that it is the first sample processing unit and with respect to the processing unit 200, the central controller 9 calculates the distance from the start position of the transport line to the inlet position as c+d and the distance to the outlet position as c+d from the registration that it is the second sample processing unit 200, the judgment that the left end of the first sample processing unit 100 is the start position of the transport line, and the registration that the width of the first sample processing unit 100 is c and registers (stores) them for controlling of the transport line. With respect to the processing unit 300, the central controller 9 calculates the distance from the start position of the transport line to the inlet position as c+e+f and the distance to the outlet position as c+e+g from the registration that it is the third sample processing unit 300, the judgment that the left end of the first sample processing unit 100 is the start position of the transport line, and the registration that the width of the first sample processing unit 100 is c and the width of the second sample processing unit is e and registers them for controlling of the transport line. Namely, the positions on the transport line corresponding to the sample access positions of the respective sample processing units which are the second parameter are decided and registered.

In the embodiment shown in Fig. 2, the reference position is the start position of the rack transport line 7, that is, the left end of the first sample processing unit and the sub-parameters are the widths of the sample processing units and the dimensions from the sample processing unit ends to the rack access positions. However, for example, a case that the width of the stocker 6 is added to the aforementioned sub-parameters at the left end of the stocker 6 from the reference position or a case that different dimensions are selected as sub-parameters may be considered. These cases are also included within the scope of the present invention.

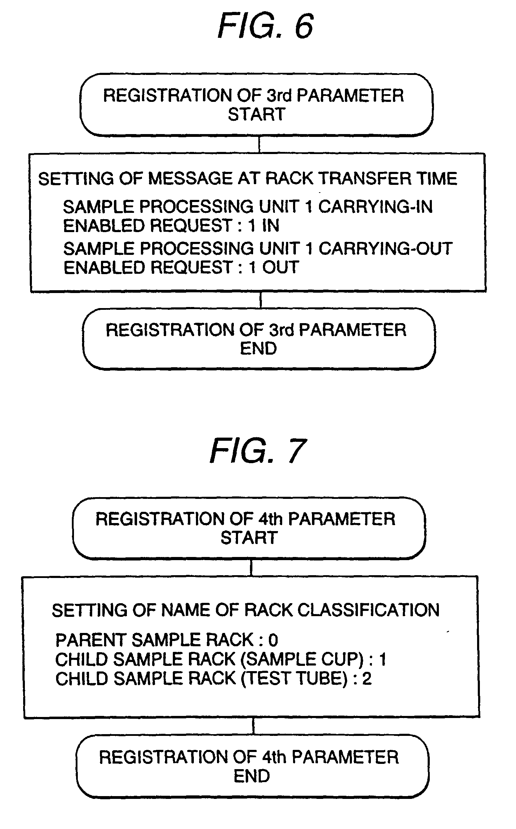

With respect to the transfer timing of sample racks of the third parameter shown in Fig. 3, the timing for sending and receiving sample racks under the condition that the respective sample processing units can carry in or carry out sample racks is registered (stored). A flow chart regarding this registration is shown in Fig. 6. In this case, for example, "1IN" when the sample processing unit 100 is to send a sample rack carrying-in enable request to the central controller 9, "1OUT" when the sample processing unit 100 is to send a sample rack carrying-out enable request to the central controller 9, "2IN" when the sample processing unit 200 is to send a sample rack carrying-in enable request to the central controller 9, "2OUT" when the sample processing unit 200 is to send a sample rack carrying-out enable request to the central controller 9, "3IN" when the sample processing unit 300 is to send a sample rack carrying-in enable request to the central controller 9, and "3OUT" when the sample processing unit 300 is to send a sample rack carrying-out enable request to the central controller 9 are sent to the central controller 9 via the communication cables. The setting of the aforementioned contents, that is, that "1IN" indicates that the sample processing unit 100 presents a sample rack carrying-in enable request, and "1OUT" indicates that the sample processing unit 100 presents a sample rack carrying-out enable request, and "2IN" indicates that the sample processing unit 200 presents a sample rack carrying-in enable request, and "2OUT" indicates that the sample processing unit 200 presents a sample rack carrying-out enable request, and "3IN" indicates that the sample processing unit 300 presents a sample rack carrying-in enable request, and "3OUT" indicates that the sample processing unit 300 presents a sample rack carrying-out enable request is registered. By doing this, even when each sample processing unit sends different messages in the case of carrying-in and carrying-out of sample racks, the rack transfer can be timed without trouble.

With respect to registration of the transfer rack classification of the fourth parameter shown in Fig. 3, the classifications of sample racks carried in the respective sample processing units and sample racks carried out from the respective sample processing units are registered. A flow chart regarding this registration is shown in Fig. 7. In this case, for example, when the sample processing unit 300 is a dispenser, the sample rack to be carried in the sample processing unit 300 is the parent sample rack which is a dispensing source and the racks to be carried out are the parent sample rack which is a dispensing source, a child sample rack loaded with a child sample dispensed in a sample cup, and a child sample rack loaded with a child sample dispensed in a test tube. On the other hand, for example, the information that the parent sample rack is 0, and the child sample rack in the sample cup is 1, and the child sample rack in the test tube is 2 is sent to the central controller 9 via the communication line. The aforementioned contents, that is, that 0 indicates the parent sample rack, and 1 indicates the child sample rack in the sample cup, and 2 indicates the child sample rack in the test tube is registered in the central controller 9. By doing this, the central controller 9 can judge what classification of sample racks the respective sample processing units carry in and carry out.

When the aforementioned four parameters are input, the central controller 9 decides the sample processing unit to perform the next process from the sample rack transfer timing with the respective sample processing units, that is, which sample processing unit presents a sample rack carrying-in enable request and which sample processing unit presents a sample rack carrying-out enable request and from the classification of sample racks to be sent and received and can decide the distance of transport from the aforementioned, the system configuration, and the sample rack access positions of the respective sample processing units. Since this does not depend on the system configuration, a combination of constituent units can be freely changed.

The display device 32 shown in Fig. 1 functions as a registered content display device comprising a display and printer and the arrangement configuration of the units and the parameters during or after registration are displayed on this display device.

Transport of sample racks on the basis of the aforementioned parameter registered contents will be explained by referring to Fig. 2. In the rack supply stocker 6, the sample 10 put on the tray 13 or 14 is transported to the transport path by a moving arm 19 and transported to immediately before a sample carrying-in unit 20 of the transport line 7 by the hook of a pulley 17. When a sample rack is put in an emergency sample feed port 18, it is moved toward the transport line 7 prior to sample racks (general samples) on the trays 13 and 14. When the sample rack 10 reaches immediately before the sample carrying-in unit 20, the central controller 9 judges whether or not to carry out it to the transport line 7. During transport of the sample rack 10 to this position, the sample ID (sample identification information) is read by the sample identification information reader 30 and the rack ID (rack identification information) is read by the rack identification information reader 31 and the central controller 9 judges the transfer destination of the sample rack by this information.

Hereunder, a case that the sample processing unit 100 uses a centrifugal separator, and the sample processing unit 200 uses a stopper pull-out unit, and the sample processing unit 300 uses a dispenser so as to coincide with the aforementioned parameter registered contents, and the first sample rack requires the process in the sample processing unit 100 and the sample processing unit 200, and the second sample rack requires the process in the sample processing unit 300 will be explained as an example.

The processing unit 100, the sample processing unit 200, the sample processing unit 300, and the rack storage stocker 8 all present a sample rack carrying-in enable request because there is no sample rack in each unit immediately after start of the operation. Namely, the sample processing unit 100 sends 1IN to the central controller 9, and the sample processing unit 200 sends 2IN, and the sample processing unit 300 sends the third parameter of 3IN. Since the storage stocker 8 is directly controlled by the central controller 9, whether or not to carry in sample racks is always seized by the central controller 9.

Next, the central controller 9 sends information of sending a sample rack to the sample processing unit 100. On the basis of this information, the sample processing unit 100 moves the rack holding member of the rack transfer mechanism 29a onto the transport line 7 and waits for arrival of the sample rack. The central controller 9 controls the transport line so as to move the sample rack up to the station position corresponding to the sample carrying-in unit 22 which is the rack access position of the sample processing unit 100. Namely, the position of the sample carrying-in unit 22 of the sample processing unit 100 is registered by second parameter registration, so that the central controller controls the transport line so as to move the sample rack by the distance a up to the sample carrying-in unit 22. By doing this, the sample rack transported to the corresponding position of the sample carrying-in unit 22 of the sample processing unit 100 is taken in the sample processing unit 100 by the rack transfer mechanism 29a and the sample centrifugal separation process is performed in the sample processing unit 100. Upon receipt of the sample rack 10, the sample processing unit 100 cancels the rack carrying-in enable request 1IN.

While the first sample rack is processed by the sample processing unit 100, the second sample rack is transported to immediately before the sample carrying-in unit 20 in the same way as with the first rack and the central controller 9 judges whether or not to carry out it to the transport line 7. In this case, the central controller 9 judges whether there is a sample rack on the transport line 7, whether the sample processing unit 100, the sample processing unit 200, or the sample processing unit 300 presents a sample rack carrying-out enable request, and whether the sample processing unit 300 which is the destination of the second sample rack is in the state that it can carry in the sample rack, that is, whether the sample processing unit 300 presents the rack carrying-in enable request 3IN. When there is no sample rack on the transport line 7, and the sample processing unit 100, the sample processing unit 200, or the sample processing unit 300 presents no sample rack carrying-out enable request, and the sample processing unit 300 presents the rack carrying-in enable request 3IN, the central controller 9 sends information of sending of a sample rack to the sample processing unit 300. On the basis of this information, the sample processing unit 300 moves the rack transfer mechanism 29a onto the transport line 7 and waits for arrival of the sample rack 10. The central controller 9 controls the transport line so as to move the sample rack up to the corresponding position of the sample carrying-in unit 24 which is the rack access position of the sample processing unit 300. Namely, the position of the sample carrying-in unit 24 of the sample processing unit 300 is registered by registration of the second parameter, so that the central controller 9 controls the sample transport line so as to move the sample rack by the distance c+e+f up to the sample carrying-in unit 22. By doing this, the sample rack transported to the corresponding position of the sample carrying-in unit 24 of the sample processing unit 300 is taken in the sample processing unit 300 by the rack transfer mechanism 29d and the dispensing process is performed in the sample processing unit 300. Upon receipt of the sample rack, the sample processing unit 300 cancels the rack carrying-in enable request 3IN.

In this case, when there is a sample rack on the rack transport line 7, while the sample rack on the transport line 7 is carried in any of the sample processing units or carried out to the storage stocker 8, the central controller 9 does not send information of sending of a sample rack to the sample processing unit 300 and lets the sample rack stand by immediately before the sample carrying-in unit 20.

When any of the sample processing units presents a sample rack carrying-out enable request and the sample processing unit which is the next destination of the sample rack carried out from the sample processing unit presents a carrying-in enable request, carrying-out of the sample rack is given priority. When explained by this example, a case corresponds to it that the transport of the second sample rack to the sample processing unit 300 is possible, and at the same time, the sample processing unit 100 presents the carrying-out enable request 1OUT for carrying out the first sample rack to the sample transport line 19 because the processing of the first sample rack is finished, and the sample processing unit 200 which is the next destination of the first sample rack presents the sample rack carrying-in enable request 2IN. In this case, the central controller 9 accepts the carrying-out enable request 1OUT of the sample processing unit 100 on a priority basis, allows the sample processing unit 100 to carry out the first sample rack, and lets the second sample rack stand by at the same time without being carried out to the transport line 7. The central controller 9 gives information of sending of a sample rack to the sample processing unit 200 and moves the sample processing unit 200 onto the rack holding member transport line 7 of the rack transfer mechanism 29c so as to receive the sample rack.

The sample processing unit 100 given permission of carrying-out of the first sample rack from the central controller 9 carries out the sample rack from the sample carrying-out unit 25 which is the rack access position to the transport line 7 using the rack transfer mechanism 29b. At this time, the sample processing unit 100 cancels the carrying-out enable request 1OUT and sends the carrying-in enable request 1IN to the central controller 9. When the sample rack is carried out onto the transport line 7, the central controller 9 controls the transport line so as to transport the sample rack to the sample processing unit 200 which is the next destination of the sample rack. At this time, the central controller 9 calculates, from the position c+d of the sample carrying-in unit 23 of the sample processing unit 200 which is the registered second parameter and the position b of the sample carrying-out unit 25 of the sample processing unit 100 from which the sample rack is carried out, the moving distance of the sample rack as a difference of (c+d)-b between them and controls the transport line 7 so as to let the sample rack move by this distance. When the sample rack reaches, the sample processing unit 200 takes the sample rack in the sample processing unit 200 by the rack transfer mechanism 29c and starts the stopper pull-out process. At the point of time when the sample rack is received, the sample processing unit 200 cancels the rack carrying-in enable request 2IN.

When the central controller 9 ascertains that the first sample rack is taken in the sample processing unit 200, it judges once again whether there is a rack on the transport line 7 and judges whether any of the sample processing units presents a sample rack carrying-out enable request and when there is nothing applicable, the central controller 9 sends information of sending of a sample rack to the sample processing unit 300. On the basis of this information, the sample processing unit 300 moves the sample rack onto the rack holding member transport line 7 of the rack transfer mechanism 29d. The central controller 9 controls the transport line so as to move the sample rack up to the sample carrying-in unit 24 which is the rack access position of the sample processing unit 300. Namely, the position of the sample carrying-in unit 24 of the sample processing unit 300 is registered by registration of the second parameter, so that the central controller 9 controls the sample transport line so as to move the sample rack by the distance c+e+f up to the sample carrying-in unit 22. By doing this, the sample rack transported to the corresponding position of the sample carrying-in unit 24 of the sample processing unit 300 is taken in the sample processing unit 300 by the rack transfer mechanism 29d and the dispensing process is performed in the sample processing unit 300. Upon receipt of the sample rack, the sample processing unit 300 cancels the rack carrying-in enable request 3IN.

When the sample processing unit 200 does not present the carrying-in enable request 2IN, carrying-out of the second sample rack to the sample processing unit 300 reversely takes priority over carrying-out of the first sample rack.

Hereinafter, carrying-out and carrying-in of the third and subsequent racks to the processing units are carried out in the same way.

When two sample processing units present a sample rack carrying-out enable request at the same time, carrying-out from the back sample processing unit is given priority. When explained by this example, a case that the sample processing units 200 and 300 present the rack carrying-out enable requests 2OUT and 3OUT at the same time corresponds to it. In this case, the central controller 9 process the rack carrying-out enable request 3OUT from the sample processing unit 300 on a priority basis and the sample rack is carried out by the rack transfer mechanism 29e from the sample processing unit 300. However, since the sample processing unit 300 is a dispenser, there are three kinds of sample racks to be carried out such as a parent sample rack, child sample rack (sample cup), and child sample rack (test tube). Therefor, the sample processing unit 300 sends the kind of a sample rack to be carried out to the central controller 9 at carrying-out time. Namely, the central controller 9 sends 0 when it is a parent sample rack, 1 when it is a child sample rack (sample cup), and the fourth parameter 2 when it is a child sample rack (test tube) and carries out the sample rack. On the basis of this information, the central controller 9 judges the destination of each sample rack, calculates the transport distance, and controls the transport line.

In the embodiment shown in Fig. 2, the rack storage stocker 8 is installed behind the sample processing unit 300, so that every sample rack is transported to the storage stocker 8. The sample rack transport distance in this case is the distance up to the storage stocker 8, that is, the distance h-g up to the right end of the sample processing unit 300. This distance may be directly calculated from the judgment that the sample processing unit is the final sample processing unit in the processing system or may be calculated as (c+e+h)-(c+e+g)=h-g from the reference position.

When all sample racks are carried out from the sample processing unit 300, the sample processing unit 300 cancels the carrying-out enable request 3OUT. When these sample racks are carried out to the storage stocker 8, the central controller 9 successively instructs carrying-out of sample racks to the sample processing unit 200 and transports sample racks carried out by the rack transfer mechanism 29c to the storage stocker 8. The transport distance in this case is the distance from the right end of the processing system to the sample carrying-out unit 23 of the sample processing unit 200, so that it is calculated as (c+e+h)- (c+d)=e+h-d from the parameter registration contents. The sample racks carried out to the stocker 8 are transported before the storage tray 15 or 16 by the hook of the pulley 27 and stored in the storage tray 15 or 16 by the rack sending mechanism 28.

In Embodiment 1, the parameters are registered by the parameter input device 11. In this case, for example, when the sample rack access position is changed due to changing of the sample processing unit, it is necessary to input them again. Therefore, in Embodiment 2 indicated hereunder, a particularly valid example in such a case will be indicated.

A difference of the constitution of Embodiment 2 from that of Embodiment 1 is that the parameter input device 11 is not required and the information input by the input device 11 of Embodiment 1 is all possessed (stored) by the unit controllers 3a, 4a, and 5a built in the respective sample processing units.

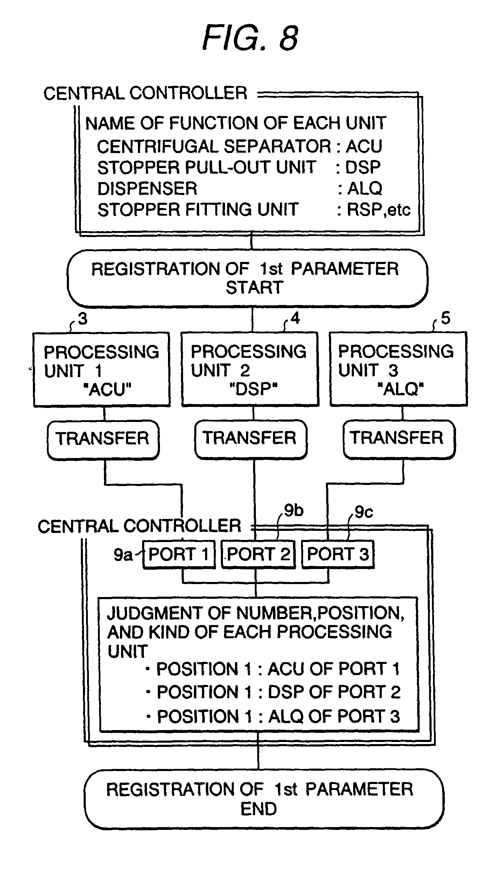

A block diagram of registration of the first parameter in Embodiment 2 is shown in Fig. 8. Also in Fig. 8, in the same way as with Embodiment 1, an example that the sample processing units are a centrifugal separator, a stopper pull-out unit, and a dispenser is shown. Also in this case, before registration of the first parameter, the names of the sample processing units having various functions and the functions corresponding to the names are registered in the central controller 9 beforehand.

The respective sample processing units 3, 4, and 5 have the unit controllers 3a, 4a, and 5a and in these unit controllers, the names of the own sample processing units corresponding to the aforementioned names registered beforehand are registered. The respective unit controllers transfer these names to the central controller 9 via the communication cables. By comparing the names registered beforehand with the names sent from the respective sample processing units, the central controller 9 recognizes and registers the functions and number of connected sample processing units. In this case, another necessary item is in which position each sample processing unit is installed in the processing system. To recognize and register it, the following method is used.

The central controller 9 is provided with the communication ports 9a, 9b, and 9c for reading the names transferred from the respective sample processing units. Therefore, it is decided at connection time to connect the first sample processing unit 3 to Port 1, the second sample processing unit 4 to Port 2, and the third sample processing unit 5 to Port 3. By doing this, the central controller 9 recognizes that the sample processing unit having the name ACU input from Port 1 is the first sample processing unit, and the sample processing unit having the name DSP input from Port 2 is the second sample processing unit, and the sample processing unit having the name ALQ input from Port 3 is the third sample processing unit and can register them.

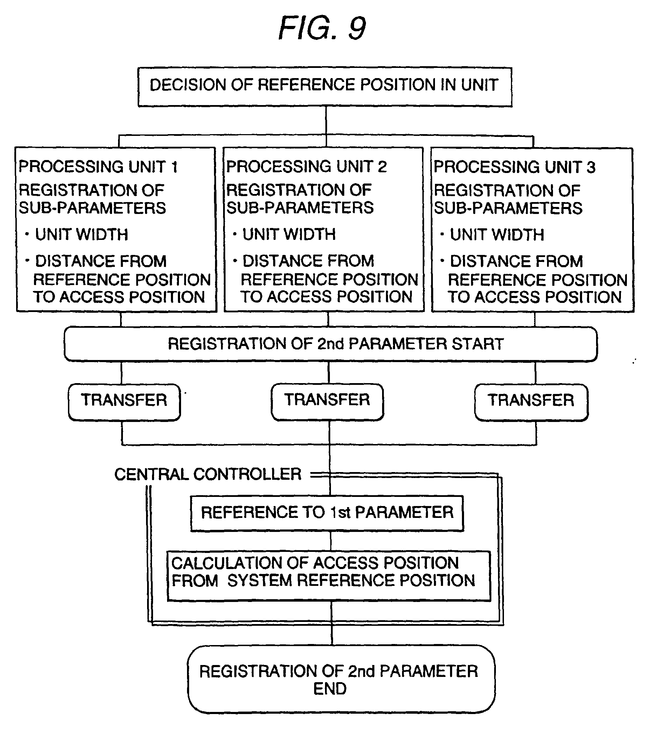

The second parameter is also registered in the respective unit controllers. The reference position in this case is required not to depend on the system configuration, so that it is necessary to fix the reference position for a certain position in each sample processing unit, for example, the left end of the unit and the sub-parameters are actually registered in the respective sample processing units. A series of flow regarding registration of the second parameter is indicated in the flow chart shown in Fig. 9.

Firstly, the aforementioned intra-unit reference positions are decided in the respective sample processing units. The reference positions are unified in all the sample processing units. Here, the left end of each sample processing unit is fixed for the reference position as an example. Next, as sub-parameters, the width of each sample processing unit and the distance from the reference position to the rack access position are registered. To this point, the system is characterized in that these data are individually registered in each of the sample processing units, so that they can be registered before the processing system is structured. Hereafter, the actual registration of the second parameter starts, and the respective unit controllers are connected to the central controller 9 via the communication cables, and the sub-parameters registered beforehand are transferred by the respective sample processing units by communication. Upon receipt of them, the central controller 9 registers the second parameter in the same way as with Embodiment 1 already explained. Namely, from the sub-parameters and the contents of system configuration registration of the first parameter, the central controller 9 automatically calculates and registers the second parameter in the form of distance.

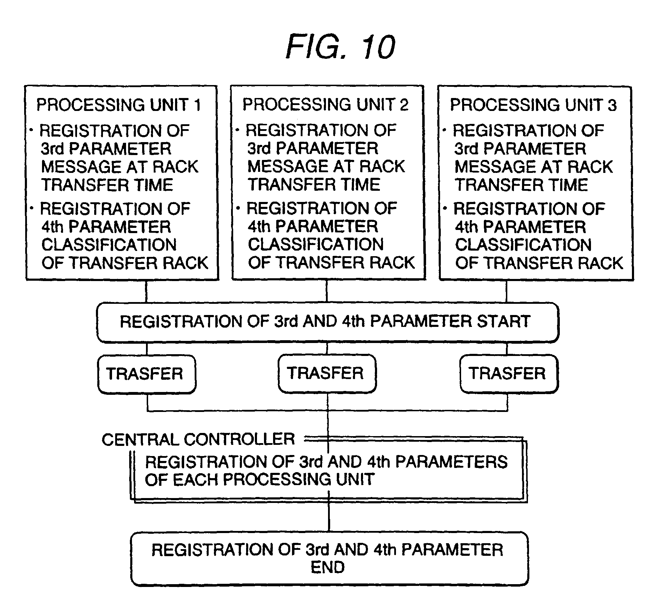

The sample rack transfer timing of the third parameter and the transfer sample rack classification of the fourth parameter also can be registered in the respective sample processing units beforehand. Namely, the contents directly registered in the central controller 9 in Embodiment 1 are registered in the respective unit controllers 3a, 4a, and 5a in Embodiment 2. A flow chart of registration of the third and fourth parameters is shown in Fig. 10. Also with respect to this registration, in the same way as with the registration of the second parameter mentioned above, when the respective sample processing units are connected to the central controller 9 via the communication cables, the third and fourth parameters are transferred to the central controller 9 from the respective sample processing units via the communication cables. From the transferred parameters, the central controller registers the timing for transferring sample racks by each of the sample processing units and the classification of sample racks transferred from each of the sample processing units.

According to the method of Embodiment 2, since the respective sample processing units themselves possess all the parameters to be registered, they can be registered according to the individual sample processing units independently of the system configuration and the parameter input operation is not required for system construction. Even when the access position is changed due to interchanging of the sample processing units constituting the processing system, the reinput is not necessary unlike Embodiment 1.

In Embodiment 3, registration using a storage medium such as an IC card or floppy disk will be explained.

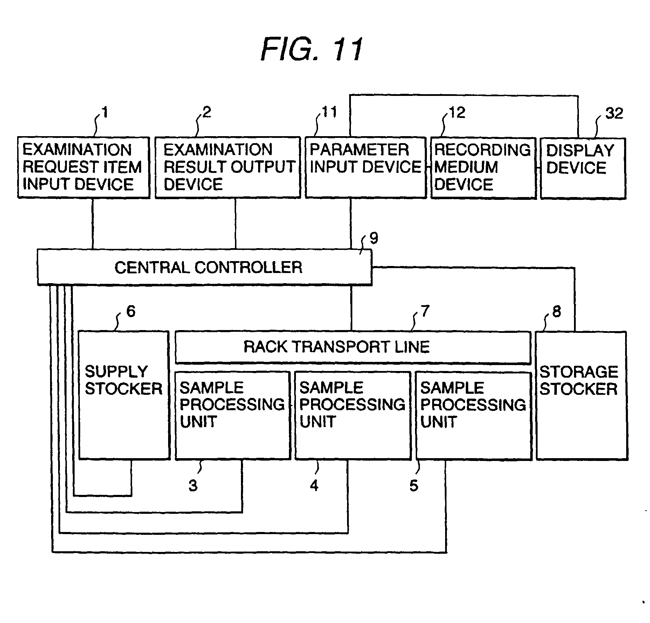

A block diagram of Embodiment 3 is shown in Fig. 11. It is a drawing of the example shown in Fig. 1 to which a storage medium reader 12 is added. In this case, the system configuration of the first parameter is registered by the parameter input device 11 according to the flow chart shown in Fig. 4. The respective sample processing units have storage media storing the sub-parameters for registration of the second parameter which are registered in the unit controllers of the respective processing units in Embodiment 2 and the third and fourth parameters and a parameter registrant sets them in storage medium reader 12 and registers the parameters by allowing the central controller 9 to read the parameters. When the registration of parameters using the storage media is used, the time for inputting all parameters can be saved and a sample processing unit having no function for registering parameters in the own sample processing unit can be incorporated into the processing system.

As Embodiment 4, a method for automatically inspecting the position of the transfer station corresponding to the rack access position of each of the sample processing units which is the second parameter and hence learning and registering the position will be explained. In this case, it is necessary to use the aforementioned methods of Embodiment 1, Embodiment 2, and Embodiment 3 to register the first parameter, the third parameter, and the fourth parameter. In this case, it is necessary to add and register the width of each of the sample processing units and the number of sample rack carrying-in ports (inlets) and carrying-out ports (outlets) possessed by the respective sample processing units as parameters.

Next, a method for automatically inspecting and registering the sample rack access position by each of the sample processing units by the central controller 9 will be explained by referring to Fig. 2.

Firstly, a sample rack with no test tube loaded (hereinafter referred to as an empty sample rack) is prepared in the rack supply stocker 6. Next, the central controller 9 outputs an instruction to the respective unit controllers 3a, 4a, and 5a so as to stand by on the rack transport line 7 with the stoppers of the carrying-in unit and carrying-out unit of the rack transfer mechanism 29 turned on. The respective unit controllers perform the operations for the instruction and when the operations are completed, send operation completion reports to the central controller 9 and the central controller 9 ascertains the operation completion reports of all the sample processing units and then carries out the empty sample rack to the transport line 7. Next, the central controller 9 calculates the total width of all the units from the widths of the respective sample processing units which are already registered, gives the total width of all the units, that is, the number of pulses for the total distance of the rack transport line 7 to the pulse motor 21, and transports the empty sample rack at a low speed and a uniform speed. The empty same rack carried out on the transport line 7 is stopped by the stopper provided in the rack transfer mechanism 29a of the sample carrying-in port 22 of the first sample processing unit 100. At this time, the sensor provided in the rack transfer mechanism detects the sample rack and requests the central controller 9 to stop the pulse motor 21 and the central controller 9 stops the pulse motor 21 of the transport line 7. The central controller 9 measures the number of pulses from feeding of the empty rack to the transport line 7 to stopping at the position corresponding to the sample carrying-in port 22 of the sample processing unit 100 or measures the number of remaining pulses for the number of pulses given beforehand and subtracts it from the given number of pulses, and hence finds the number of pulses required from carrying the empty sample rack in the transport line 7 to transporting it to the sample carrying-in unit 22 of the sample processing unit 100, and calculates the distance up to the sample carrying-in unit 22 of the sample processing unit 100 on the basis of it.

When the stopper provided in the rack transfer mechanism 29a of the sample carrying-in unit 22 of the sample processing unit 100 is turned off next and the transport of the transport line 7 is started again, the empty sample rack is stopped next by the rack transfer mechanism 29b of the sample carrying-out unit 25 of the sample processing unit 100. Also in this case, the sensor provided in the rack transfer mechanism detects the rack and requests the central controller 9 to stop the pulse motor 21 and the central controller 9 stops the pulse motor 21. The central controller 9 also carries the empty sample rack in the transport line 7 on the basis of the measured number of pulses and then calculates the distance up to the sample carrying-out port 25 of the sample processing unit 100.

Hereafter, according to the same sequence, the central controller 9 calculates and registers the positions of the sample carrying-in unit and carrying-out unit of each of the sample processing units. Finally, the sample rack transported from the sample carrying-in unit or carrying-out unit closest to storing is transported to the storage stocker 8 and stored.

By the aforementioned operations, the central controller 9 can automatically inspect, learn, and register the position of the transfer station on the transport line corresponding to the access position of each of the sample processing units which is the second parameter.

According to each embodiment of the present invention, when the processing system is to be constructed by combining individual sample processing units having various functions and dimensions such as centrifugal separation, stopper pull-out, dispensing, attaching of bar code labels, stopper fitting, classification, and analysis with the transport line, modification of the control software and hardware is not required for each processing system and even when any constituent unit is to be changed, a flexible sample processing system which can be easily reconstructed can be provided. At the same time, an enormous time and cost required for modification can be reduced greatly.

**Claims**

1. A sample processing unit comprising a transport line for transporting sample racks holding samples, a supply stocker for supplying sample racks to be transported to said transport line, and a plurality of sample processing units arranged along said transport line, wherein:

   said sample processing unit has a controller for controlling the transport operation of sample racks by said transport line,
   means for transferring information of the access position for a sample rack in each of said sample units to said controller, and
   a storage unit functioning as a part of said controller for storing information of the number and arrangement order of sample processing units arranged in said sample processing system and also storing access position information in each of said sample processing units and
   said controller decides the position of a transfer station for sample racks on said transport line so as to correspond to said sample rack access position in each of said sample processing unit on the basis of said information stored in said storage unit.

2. A sample processing system according to Claim 1, wherein said controller controls the operation of said transport line so as to transport sample racks from said supply stocker to any position in said transfer station decided so as to correspond to each of said sample processing unit.

3. A sample processing system according to Claim 1, wherein said transfer means is an input device for inputting said access position information for sample racks in each of said sample processing units.

4. A sample processing system according to Claim 3, wherein said input device transfers, when said information of the number and arrangement order of sample processing units arranged in said processing system is input, said information to said controller.

5. A sample processing system according to Claim 1, wherein:

> said controller includes a central controller for controlling the operation of said transport line and also includes a unit controller built in each of said sample processing units and
> each of said unit controllers stores access position information for sample racks in the corresponding sample processing unit.

6. A sample processing system according to Claim 5, wherein said unit controllers function as means for transferring said access position information of sample racks to said central controller.

7. A sample processing system according to Claim 1, wherein said system has a reader for reading said access position information for sample racks stored in said storage media in correspondence to said individual sample processing units from said storage media and said reader functions as means for transferring said sample rack access position information to said controller.

8. A sample processing system according to Claim 1, wherein:

> said system has a rack transfer device which is attached to each of said sample processing units and has a rack sensor and
> when a rack for confirming said access position by said transport line is transported, said rack sensors transfer information of detection of said access position confirmation rack to said controller.

# FIG. 1

EXAMINATION REQUEST ITEM INPUT DEVICE ~ 1

EXAMINATION RESULT OUTPUT DEVICE ~ 2

PARAMETER INPUT DEVICE ~ 11

DISPLAY DEVICE ~ 32

1B
2B
11B
8B

CENTRAL CONTROLLER

6
30,31
7B
7
8

RACK TRANSPORT LINE

SUPPLY STOCKER

CENTRIFUGAL UNIT

STOPPER PULL-OUT UNIT

DISPENSING UNIT

STORAGE STOCKER

6B
3B
3
3a
4
4a
5
5a
4B
5B

## FIG. 2

## FIG. 3

START

1st PARAMETER :
REGISTRATION OF SYSTEM
CONFIGURATION

2nd PARAMETER :
REGISTRATION OF ACCESS
POSITION FROM REFERENCE
POSITION OF EACH UNIT

3rd PARAMETER :
REGISTRATION OF RACK
TRANSFER TIMING

4th PARAMETER :
REGISTRATION OF TRANSFER
RACK KIND

END

# FIG. 4

NAME OF FUNCTION OF EACH UNIT

CENTRIFUGAL SEPARATOR : ACU
STOPPER PULL-OUT UNIT    : DSP
DISPENSER                : ALQ
STOPPER FITTING UNIT     : RSP, etc.

REGISTRATION 1st PARAMETER
START

HOW MANY PROCESSING UNITS ?
n = 3

WHAT PROCESSING UNIT
AT EACH POSITION ?

POSITION 1 : ACU
POSITION 2 : DSP
POSITION 3 : ALQ

REGISTRATION OF 1st PARAMETER
END

# FIG. 5

DECISION OF REFERENCE POSITION

REGISTRATION OF 2nd PARAMETER
START

DIRECTLY INPUT OF ACCESS
POSITION FROM REFERENCE
POSITION                                    YES

NO

INPUT OF SUB-PARAMETER
• UNIT WIDTH
• DISTANCE FROM UNIT
  END  TO ACCESS POSITION

REFERENCE TO 1st PARAMETER

CALCULATION OF ACCESS POSITION
FROM REFERENCE POSITION

REGISTRATION OF 2nd PARAMETER
END

# FIG. 6

REGISTRATION OF 3rd PARAMETER
START

SETTING OF MESSAGE AT RACK TRANSFER TIME

SAMPLE PROCESSING UNIT 1 CARRYING-IN
ENABLED REQUEST : 1 IN

SAMPLE PROCESSING UNIT 1 CARRYING-OUT
ENABLED REQUEST : 1 OUT

REGISTRATION OF 3rd PARAMETER
END

# FIG. 7

REGISTRATION OF 4th PARAMETER
START

SETTING OF NAME OF RACK CLASSIFICATION

PARENT SAMPLE RACK : 0
CHILD SAMPLE RACK (SAMPLE CUP) : 1
CHILD SAMPLE RACK (TEST TUBE) : 2

REGISTRATION OF 4th PARAMETER
END

# FIG. 8

CENTRAL CONTROLLER

NAME OF FUNCTION OF EACH UNIT
CENTRIFUGAL SEPARATOR : ACU
STOPPER PULL-OUT UNIT   : DSP
DISPENSER               : ALQ
STOPPER FITTING UNIT    : RSP,etc

REGISTRATION OF 1st PARAMETER
START

3

PROCESSING
UNIT 1
"ACU"

TRANSFER

4

PROCESSING
UNIT 2
"DSP"

TRANSFER

5

PROCESSING
UNIT 3
"ALQ"

TRANSFER

CENTRAL CONTROLLER

9b    9c

9a | PORT 1 | | PORT 2 | | PORT 3 |

JUDGMENT OF NUMBER,POSITION,
AND KIND OF EACH PROCESSING
UNIT
· POSITION 1 : ACU OF PORT 1
· POSITION 1 : DSP OF PORT 2
· POSITION 1 : ALQ OF PORT 3

REGISTRATION OF 1st PARAMETER
END

# FIG. 9

DECISION OF REFERENCE POSITION IN UNIT

| PROCESSING UNIT 1 | PROCESSING UNIT 2 | PROCESSING UNIT 3 |
|---|---|---|
| REGISTRATION OF SUB-PARAMETERS | REGISTRATION OF SUB-PARAMETERS | REGISTRATION OF SUB-PARAMETERS |
| · UNIT WIDTH | · UNIT WIDTH | · UNIT WIDTH |
| · DISTANCE FROM REFERENCE POSITION TO ACCESS POSITION | · DISTANCE FROM REFERENCE POSITION TO ACCESS POSITION | · DISTANCE FROM REFERENCE POSITION TO ACCESS POSITION |

REGISTRATION OF 2nd PARAMETER START

TRANSFER      TRANSFER      TRANSFER

CENTRAL CONTROLLER

REFERENCE TO 1st PARAMETER

CALCULATION OF ACCESS POSITION FROM SYSTEM REFERENCE POSITION

REGISTRATION OF 2nd PARAMETER END

18

# FIG. 10

| PROCESSING UNIT 1 | PROCESSING UNIT 2 | PROCESSING UNIT 3 |
|---|---|---|
| · REGISTRATION OF 3rd PARAMETER MESSAGE AT RACK TRANSFER TIME<br><br>· REGISTRATION OF 4th PARAMETER CLASSIFICATION OF TRANSFER RACK | · REGISTRATION OF 3rd PARAMETER MESSAGE AT RACK TRANSFER TIME<br><br>· REGISTRATION OF 4th PARAMETER CLASSIFICATION OF TRANSFER RACK | · REGISTRATION OF 3rd PARAMETER MESSAGE AT RACK TRANSFER TIME<br><br>· REGISTRATION OF 4th PARAMETER CLASSIFICATION OF TRANSFER RACK |

REGISTRATION OF 3rd AND 4th PARAMETER START

TRASFER        TRASFER        TRASFER

CENTRAL CONTROLLER
REGISTRATION OF 3rd AND 4th PARAMETERS OF EACH PROCESSING UNIT

REGISTRATION OF 3rd AND 4th PARAMETER END

# FIG. 11

| EXAMINATION REQUEST ITEM INPUT DEVICE | EXAMINATION RESULT OUTPUT DEVICE | PARAMETER INPUT DEVICE | RECORDING MEDIUM DEVICE | DISPLAY DEVICE |
|---|---|---|---|---|

CENTRAL CONTROLLER

RACK TRANSPORT LINE

SUPPLY STOCKER

| SAMPLE PROCESSING UNIT | SAMPLE PROCESSING UNIT | SAMPLE PROCESSING UNIT |
|---|---|---|

STORAGE STOCKER

# INTERNATIONAL SEARCH REPORT

| International application No. |
|---|
| PCT/JP98/02044 |

**A. CLASSIFICATION OF SUBJECT MATTER**
Int.Cl$^6$  G01N35/00, G01N35/02, G01N35/04

According to International Patent Classification (IPC) or to both national classification and IPC

**B. FIELDS SEARCHED**

Minimum documentation searched (classification system followed by classification symbols)
Int.Cl$^6$  G01N35/00, G01N35/02, G01N35/04

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-1998 |
| Kokai Jitsuyo Shinan Koho | 1971-1997 | Jitsuyo Shinan Toroku Koho | 1996-1998 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP, 7-167866, A  (Hitachi, Ltd., et al.), July 4, 1995 (04. 07. 95), Page 2, right column, line 20 to page 3, right column, line 20 ; Fig. 1  (Family: none) | 1-8 |
| A | JP, 5-48130, Y2  (Toa Medical Electronics Co., Ltd.), December 20, 1993 (20. 12. 93), Page 5, right column, lines 14 to 29 ; Figs. 1 to 2 (Family: none) | 1-8 |
| A | JP, 3-78583, B2  (Nittec Co., Ltd.), December 16, 1991 (16. 12. 91), Page 1, left column, line 2 to right column, line 3 ; Fig. 1  (Family: none) | 1-8 |

☐ Further documents are listed in the continuation of Box C.   ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| May 29, 1998 (29. 05. 98) | June 16, 1998 (16. 06. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)